# EUROPEAN PATENT SPECIFICATION

(11) **EP 2 284 560 B1**
(45) Date of publication and mention of the grant of the patent: **26.06.2013**
(21) Application number: 10183503.1
(22) Date of filing: 29.05.1998
(51) Int. Cl.: G01S 19/30, G01S 19/37

(54) **Highly parallel GPS correlator system and method**
Hoch paralleles GPS-Korrelatorsystem und -verfahren
Système et procédé de corrélateur GPS hautement parallèle

(30) Priority: 24.06.1997 US 50647
(43) Date of publication of application: 16.02.2011
(62) Divisional of application: 09003719.3
(73) Proprietor: Snaptrack, Inc., San Jose, CA 95117 (US)
(72) Inventor: Krasner, Norman, San Carlos, CA 94070 (US)
(74) Representative: Walker, Ross Thomson

(56) References cited:
- EP-A- 0 668 663
- WO-A-97/14049
- US-A- 4 785 463
- ROBERT VAN WECHEL: "Fast Acquisition Correlators for GPS", PROC. OF THE 52ND ANNUAL MEETING OF THE INSTITUTE OF NAVIGATION, 19 June 1996 (1996-06-19), pages 255-262, XP002614890, Cambridge, MA,USA

## Description

### FIELD OF THE INVENTION

The present invention relates generally to the field of global positioning systems, and more particularly to receiving and tracking satellite signal in a parallel correlation receiver system.

### BACKGROUND OF THE INVENTION

Most conventional Global Positioning System (GPS) receivers utilize serial correlators in order to acquire, track, and demodulate signals transmitted from GPS satellites. The U.S. Global Positioning System (GPS) Orbital Constellation consists of 24 satellites or space vehicles (SV) which orbit the earth in 12 hour orbits. The satellites are arranged in six orbital planes each containing four satellites. The orbital planes are spaced 60 degrees apart from each other and are inclined approximately fifty-five degrees with respect to the equatorial plane. This constellation provides a user with approximately five to eight satellites visible from any point on earth.

Each transmitted GPS signal is a direct sequence spread spectrum signal. The signal available for commercial use is that associated with Standard Positioning Service (SPS) and utilizes a direct sequence bi-phase spreading signal with a 1.023 Mchip per second spread rate placed upon a carrier at 1575.42 MHz. Each satellite transmits a unique pseudo-random noise code (also referred to as the 'Gold' code) which identifies the particular satellite, and allows signals simultaneously transmitted from several satellites to be simultaneously received by a receiver, with little interference from one another. The pseudo-random noise (PN) code sequence length is 1023 chips, corresponding to 1 millisecond time period. In addition, data superimposed on each signal is 50 baud binary phase shift keyed (BPSK) data with bit boundaries aligned with the beginning of a PN frame; 20 PN frames occur over 1 data bit period (20 milliseconds).

A primary goal of a GPS receiver is to determine the time-of-arrival of the PN codes. This is accomplished by comparing (for each received signal) a locally generated PN reference against the received signal and "sliding" the local reference in time until it is time-aligned with the received signal. The two signals are compared with one another by a multiplication and integration process known as the correlation process. When the two signals are time aligned a large output results. Typical serial correlators used in current standard GPS receivers compare the local and received signals one time offset at a given time. If such a comparison is done every half-chip interval, 2046 comparisons (or tests) would be required to completely search over one PN epoch (1 millisecond). Such a search must be done in turn for each of the several of the satellites in view. In addition, errors in received signal frequency often require additional searches to be made for various hypotheses of signal frequency. The time to perform this search may be very lengthy, especially under low input signal-to-noise ratio situations. Conventional GPS receivers utilize a multiplicity of such correlators operating in parallel to speed up the acquisition process. In order to achieve rapid acquisition at very low received signal to noise ratios, an extremely high number (perhaps thousands) of such correlators may be requited. A straightforward implementation of such a system would thus result in very complex, expensive circuitry.

It is therefore desirable to simplify the circuitry associated with correlators within GPS receivers. Such an architecture would effectively and efficiently implement the processing functions of a large number of correlators operating in parallel. It is further desirable to integrate a method for tracking received GPS signals, following the acquisition procedure, in which common components, such as common hardware, are used for both the acquisition and tracking functions.

Examples of prior art arrangements include IEEE Publication XP-002614890, entitled "Fast Acquisition Correlators for GPS" (R. VAN WECHEL), International Patent Application No. WO-9714049 (SNAPTRACK INC.), and European Patent Application No. EPA-0668663 (NTT MOBILE COMM. NETWORK, INC.).

According to one aspect of the present invention, there is provided a method of processing satellite positioning system signals as defined in claim 1 hereinafter.

According to another aspect of the present invention, there is provided a circuit for processing satellite positioning system signals as defined in claim 9 hereinafter.

According to a further aspect of the present invention, there is provided a computer readable medium as defined in claim 12 hereinafter.

Embodiments of the present invention seek to provide a method and apparatus for acquiring and tracking global positioning system signals with a parallel architecture GPS receiver. Embodiments of the present invention seek to enable all possible phases of a given pseudo-random noise sequence corresponding to a single GPS signal to be processed in parallel.

In one embodiment of the present invention, the parallel correlator circuit for a channel within a GPS receiver contains a plurality of multi-correlator units. Each multi-correlator unit contains a pseudo-random noise generator and an N-stage delay circuit. The N-stage delay circuit processes each pseudo-random noise frame for N successive lags. The parallel correlators allow the acquisition and tracking of multiple frames of data comprising the received global positioning system signal, This results in a combination of acquisition and tracking functions in a common circuit featuring reduced complexity.

Other features of the present invention will be apparent from the accompanying drawings and from the detailed description which follows.

### BRIEF DESCRIPTION OF THE DRAWINGS

The present invention is illustrated by way of example and not by way of limitation in the figures of the accompanying drawings in which references indicate similar elements and in which:
Figure 1 is a block diagram representation of a prior art global positioning system correlator circuit.
Figure 2 is a block diagram representation of a global positioning system receiver incorporating a highly parallel correlator circuit according to one embodiment of the present invention.
Figure 3A is a block diagram representation of a global positioning system correlator circuit according to one embodiment of the present invention.
Figure 3B is a block diagram representation of a global positioning system correlator circuit according to an alternative embodiment of the present invention.
Figure 4A provides a timing analysis of the operation of the parallel correlator of Figure 3A.
Figure 4B provides a timing analysis of the operation of the parallel correlators of Figure 3B.
Figure 5 is a block diagram representation of a global positioning system which implements the acquisition and tracking operations according to one embodiment of the present invention.
Figure 6 shows a block diagram of a remote global positioning system which implements an acquisition circuit according to an alternative embodiment of the present invention.

### DETAILED DESCRIPTION

A method and apparatus for receiving global positioning system signals through a parallel processing receiver is described. In the following description, for purposes of explanation, numerous specific details are set forth in order to provide a thorough understanding of the present invention. It will be evident, however, to one skilled in the art that the present invention may be practiced without these specific details. In other instances, well-known structures and devices are shown in block diagram form to facilitate explanation.

To clarify the description of the present invention, the following definitions are provided. A "correlation" means a comparison of two data sequences (typically a sampled signal and a locally generated reference signal), performed by multiplying the two sequences together term by term, summing the result, and computing the magnitude, or magnitude-squared, of the result. The multiplication operation may be complex if either sequence is represented as a set of complex numbers. This is often the caseifin-phase and quadrature (complex) samples of an incoming signal are one of the sequences to be processed. In addition unknown carrier phase and/or frequency can be incorporated into a signal representation through use of complex representation.

According to the above definition, if a correlation is performed on two sequences of length n, then this correlation may be extended to length n+1 by one additional multiplication and addition; that is, samples numbered n+1 of the two sequences are multiplied and added to the previous correlation (prior to the magnitude calculation). This is referred to as "updating" the correlation. In many situations the correlation is computed though an updating process until a fixed number of samples are processed, and then this final correlation result is either compared to a threshold or is further processed. The correlation then begins anew, i.e., the updating begins with the value zero. This procedure is often termed "integrate and dump".

In certain applications, the relative phasing of an incoming data sequence and a locally generated sequence may be unknown a priori. Hence, to determine this phasing, a series of correlations are performed in which the relative phase of the two sequences is altered from one correlation to the next. The first sequence may be fixed and the second sequence delayed to perform such a set of correlations, or the second sequence may be fixed and the first sequence delayed to perform such a set of correlations; or a combination of the two techniques can be performed. These cases are considered separately in the present invention. A particular relative phasing between two sequences is termed a "lag", where this term comes from its relation to delay.

A collection or group of correlations, performed simultaneously, or nearly simultaneously, as described in the above paragraph, is termed a "multi-correlation". For example, a multi-correlation may correspond to the computation of N correlations having lags 0 to N-1 samples. This is distinguished from a serial correlation, in which one correlation is performed on the two sequences, the result is dumped, and then a second correlation is performed on a separate portion of at least one of the sequences, and so on. There is no inherent parallelism in this type of structure.

As in the previous paragraph it may be the case that one desires to compute a set of different correlations which differ from one another by the relative phasings of the two sequences. This is especially the case when the sequences are periodic. The set of all such phasings in the periodic case is termed a "periodic correlation function", or sometimes just a "correlation function." That is, the correlation function is a collection of correlations that spans all possible phasings of the two sequences.

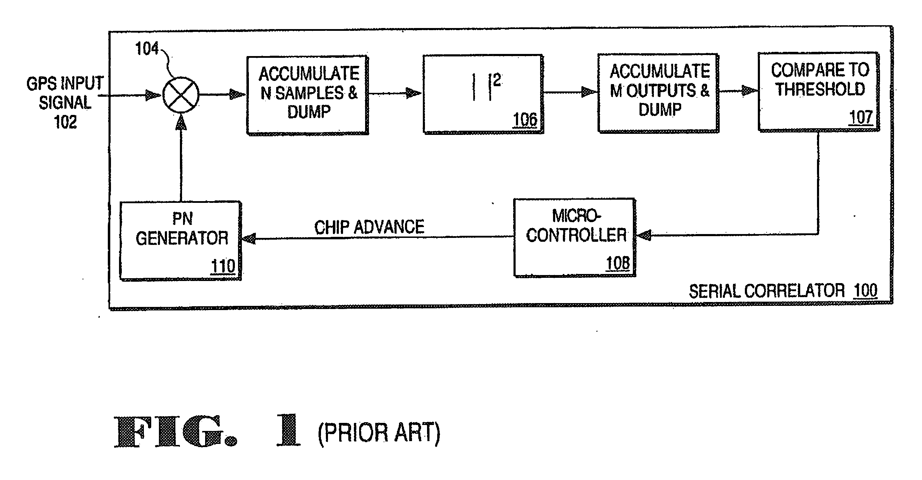

Global Positioning System (GPS) receivers receive GPS signals transmitted from orbiting GPS satellites and determine the tune-of-arrival (TOA) of unique pseudo-random noise (PN) codes by comparing the time shift between the received PN code signal sequence and an internally generated PN signal sequence. As described above, the signal comparison is performed in a correlation process which entails multiplying and integrating the received and generated signals. A typical prior art serial correlator circuit utilized in common GPS receivers is illustrated in Figure 1. The correlator 100 receives an input GPS signal 102 and combines, in multiplier 104, the received signal 102 with an internally generated PN code produced by a PN generator 110. A magnitude squaring operation 106 is then performed on an accumulated set of samples of the combined signal. Comparator 107 indicates when a match between the received and internally generated PN code has occurred based upon a pre-set threshold level. A micro - controller 108 receives the interrupt signals transmitted by comparator 107, and controls the sequencing of PN chips generated by PN generator 110.

According to the system of correlator 100, the received signal 102 is compared to the sequenced PN chips one time offset at a time, thus requiring a multitude of comparisons over one PN epoch. For example, if a comparison were performed every one-half chip interval, 2046 comparisons would be required to completely search over one PN epoch. In order to speed the acquisition process, a conventional GPS receiver might use a multiplicity of correlators 100 in parallel. In this case, 2046 such correlators would be required to perform the comparison operations every one-half chip interval. Thus, the conventional method clearly requires complex correlator circuitry in order to provide sufficiently fast acquisition.

### Parallel Correlator

An improved acquisition circuit for use in GPS receivers, according to one embodiment of the present invention, utilizes common hardware that is time-shared among a large number of correlator channels to produce a multiplicity of time offsets, or "lags", which are processed in parallel, rather than serially as in prior systems.

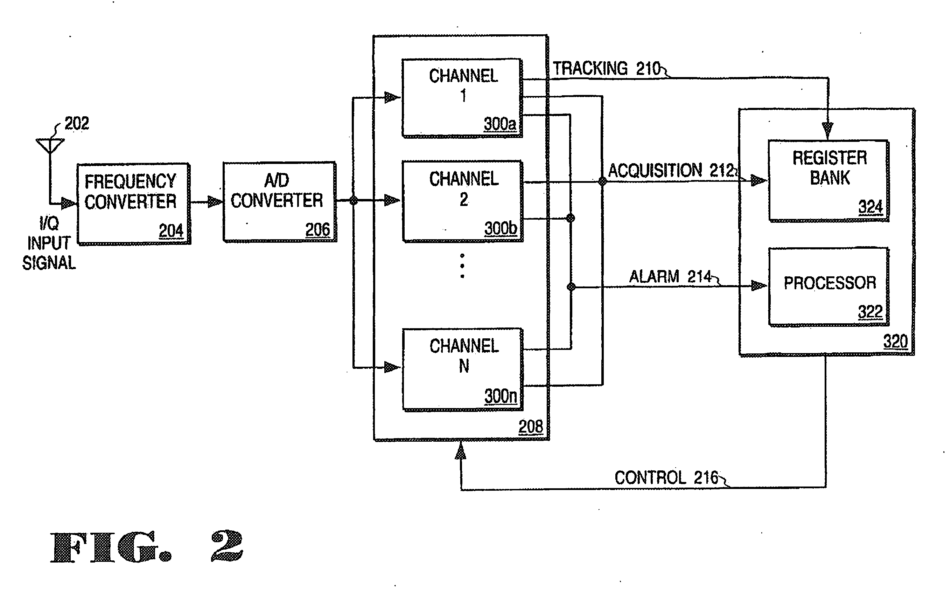

Figure 2 illustrates a GPS acquisition circuit comprising separate correlator circuits for multiple input channels. The input baseband signal from satellites in view are received by antenna 202. The input baseband signal is composed of separate in-phase (1) and quadrature (Q) components. This signal is input to frequency converter 204 which converts the input radio frequency signal (RF) to an intermediate frequency (IF). The intermediate frequency signal is then converted from an analog signal to a digital bitstream in analog-to-digital (A/D) converter 206. The digital bitstream from A/D converter 206 is then input to correlator circuit 208.

Correlator circuit 208 contains one or more parallel correlators, each performing a correlation operation for an individual channel, each channel being dedicated to a particular satellite in view. In Figure 2, parallel correlator circuits 300a-300n are illustrated for channels 1 to N. In a receiver used for the standard GPS orbital constellation, 10 parallel correlators 300 may be provided (N=10) to enable the receiver to acquire and track signals from the 5 to 8 satellites that typically may be in view under most conditions. The acquisition signal 212 from each channel is input to a register bank 324 within processing unit 320. A tracking signal 210 is input to register bank 324 from the channel 1 parallel correlator 300a. In an alternative embodiment of the present invention, tracking signal 210 may be output from any of the other channels 2-N or a combination of any such channels. An alarm signal 214 from each parallel correlator 300a-n is input to processor 322 within circuit 320. Circuit 320 provides a feedback control signal 216 to correlator circuit 208. The feedback control signal 208 comprises Doppler compensation data among other control signals.

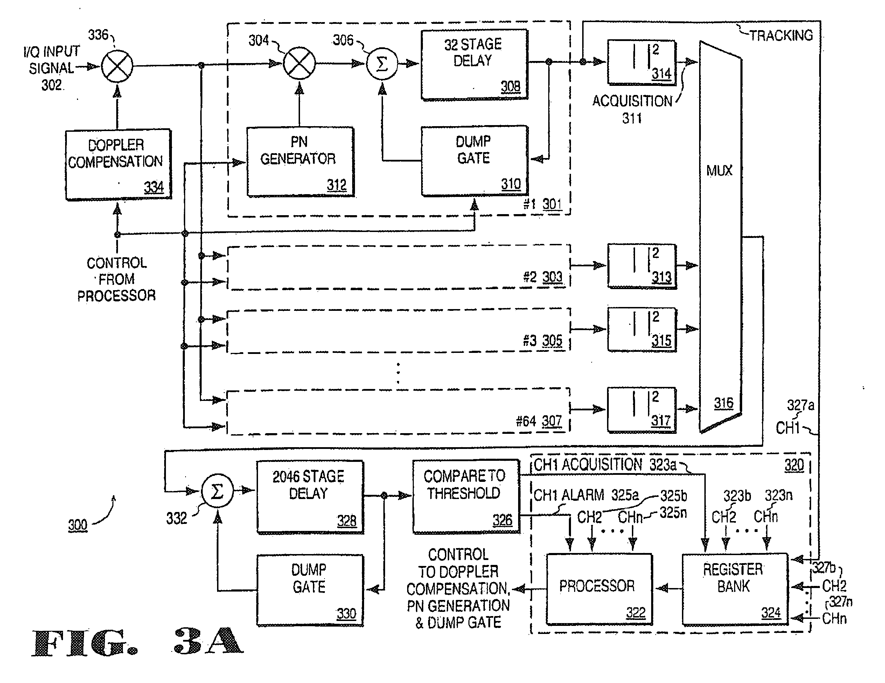

Figure 3A provides a detailed block diagram of a parallel correlator circuit according to one embodiment of the present invention. The circuit of Figure 3A consists of a parallel correlator 300 and a processor/memory circuit 320. Parallel correlator 300 can process in parallel all possible phases of a given PN sequence corresponding to a single GPS signal. Parallel correlator 300 represents a single channel parallel correlator, such as channel 1 parallel correlator 300a of parallel correlator circuit 208 in Figure 2. A multiplicity of such structures 300 can be constructed to process in parallel a multiplicity of GPS channels, as illustrated in Figure 2.

Parallel correlator 300 of figure 3A effectively implements 2046 individual correlator circuits. The input signal 302 is input in parallel to 64 separate multi-correlator units. Multi-correlator unit 301 illustrates the components within each multi-correlator unit. Figure 3A contains block structures for the second unit 303, the third unit 305, and the 64th unit 307. It should be understood that the structures for multi-correlator units 2-64 contain the same elements illustrated in first multi-cotrelator unit 301. By utilizing individual multi-correlator units, each of which processes a multiplicity of PN lags, the overall complexity of the correlator circuit 300 is dramatically reduced.

Each of the multi-correlator units performs the function of 32 parallel correlators. As illustrated for the first unit 301, each multi-correlator unit contains a PN generator 312 that is time shared among 32 successive PN one-half chip phases, or "lags". PN generator 312 produces replicas of the C/A (coarse/acquisition) code for any one of the satellites in the GPS constellation. Each lag represents a particular time position associated with the PN frame. As one data sample is input to parallel correlator 300, it is multiplied by each of 32 successive half-chips from the PN generator 312 and summed with similar results for previous data samples using the loop integrator composed of adder 306 and delay line 308. The multi-correlator unit 301 is run at 32 times the PN sample rate (e.g., 32x2.046 MHz) and thus the unit utilizes a clock that may be considered to have 32 phases. In each phase (approximately 1/64 microsecond in length), a particular PN lag is processed. When the next data sample is input, the process repeats, except that the PN generator 312 is advanced one-half chip.

The output from 32-stage delay 308 is dumped once per PN frame or a multiple thereof. Each multi-correlator unit processes a separate group of 32 lags. The first unit 301 processes lags 0-31; the second unit 303 processes lags 32-63; the third unit 305 processes lags 64-95; and so on until the 64th unit 307 which processes lags 2016-2047. Thus, after 65,472 clock cycles (32x2046 clock cycles) one PN frame has been processed for 32 successive lags. In one embodiment of the present invention, the 32-stage delay circuit 308 may be implemented in memory in which the output from multiplier 304 is written to successive addresses. The data is read from a particular address, added to the input signal in adder 304, and the sum is written to the same address. The address counter is then advanced, and the process repeated. In the 32-stage delay, this operation is performed 32 times.

The output of the loop integrator within multi-correlator unit 301 is output from the 32-stage delay 308 to squaring circuit 314 to remove effects of carrier frequency error and data inversions. Each of the 64 multi-correlator units contains its own dedicated squaring circuit. For example, the output from the loop integrator for the second multi-correlator unit 303 is output to squaring circuit 313; the output from the loop integrator for the third multi-correlator unit 305 is output to squaring circuit 315; and the output from the loop integrator for the 64th multi-correlator unit 307 is output to squaring circuit 317. Only 32 successive outputs from the multi-correlators need to be processed by the squaring circuits at the end of each PN frame.

The output signals from all 64 multi-correlator loops are input to a multiplexer 316 which produces a single output signal from the 64 input signals, The output from multiplexer 316 is transmitted to a following loop integrator which comprises a 2046-stage delay 328, dump gate 330, and adder 332. This loop integrator provides post-detection integration of all the constituent correlators (2046 in number). Note that since the dump rate at the output of multiplexer 316 corresponds to the PN frame rate for each of the 2046 correlators, the average data rate into the following post-detection integrator is only 2.046 Msamples/sec. Hence, the following post-detection loop integrator may be implemented with relatively inexpensive circuitry. It should be noted that, like the 32-stage delay 308, the 2046-stage delay circuit 328 may be implemented in memory in which the output from multiplexer 316 is read from and written to successive addresses. The data is read from a particular address, added to the input signal in adder 332, and the sum is written to the same address. The address counter is then advanced, and the process repeated. In the 2046-stage delay, this operation is performed 2046 times.

The output signal from delay circuit 328 of the post-detection loop integrator is input to a comparator 326. Comparator 326 compares the post-detection output signal against a predetermined threshold value. If the post-detection output signal exceeds the level of the threshold, an alarm signal 325a is transmitted to processor 322. According to one embodiment of the present invention, processor 322 receives separate alarm signals 325a-325n from each of the parallel correlator circuits for channels 1-N within correlator circuit 208. Processor 322 provides a control output to Doppler compensation unit 334 and the PN generator 312 and dump gate circuits 310 within each of the 64 multi-correlator units 301-307. The output from the Doppler compensation circuit 334 is combined with the I/Q input signal 302 in multiplier 336.

The threshold comparator circuit 326 also produces an acquisition signal 323 a which may be used for more precise time-of-arrival measurement. Acquisition signal 323a, which represents the acquisition signal for channel 1 parallel correlator 300a, is input to register bank 324 within processing unit 320. According to one embodiment of the present invention, register bank 324 also receives separate acquisition signals 323b-323n from each of the parallel correlator circuits for channels 2-N within correlator circuit 208. Register bank 324 stores data in the vicinity of the threshold crossing detected by threshold comparator 326. It should be noted that register bank 324 may be implemented in a memory with addressable storage locations.

The theory behind the preceding circuit description is now explained. Normally, the input sample rate is a multiple of the chip rate. If the input signal contains a transmitted waveform matched to a given correlator, the data out of multiplexer 316 will contain a narrow spike corresponding to lags spanning a width of approximately one chip duration. One spike will occur for each frame period and provides time-of-arrival information, modulo one PN frame period. If squaring circuits 311-317 were deleted, then the signal, being quadrature represented, produces a spike which is a complex number. Its polarity reverses in phase at the data baud boundaries in accordance with the transmitted data stream. In addition, the phase angle may be slowly advancing or retarding in time due to small frequency differences between the received signal carrier frequency and the locally generated frequency.

When the signal is very weak, e.g., due to blockage by objects such as trees or buildings, each of these spikes may be obscured by noise and hence are not directly usable for time-of-arrival measurement. To build up the energy of the spikes, the output of the multi-correlator units may be detected via a square-law operation, in order to remove the effect of varying phase angles. The energy from one PN frame is then added to that of the previous frame through a delay line integrator (e.g., 328). For a delay of one PN frame, a spike from a previous frame will be delayed by exactly one PN frame, and hence this energy will exit the delay line just as the spike from the next frame is about to enter the delay line. The spikes are then added together by the adder circuit 332 to produce a stronger spike. The random portions of noise will be incoherently added (a DC level will be increased) and hence will only grow as the square-root of the number of frames so summed. The DC level associated with the noise may be determined through an averaging process at the integrator output and subtracted from this final output. This eases the determination of an appropriate detection threshold in comparator 326.

In one embodiment of the present invention, parallel correlator 300 can also be used to perform tracking of GPS signals as well as signal acquisition, thus allowing a common hardware to be used for both tracking and acquisition. During tracking of a GPS signal only a small subset ofPN lags need to be examined at a rate of approximately once per PN frame. Thus data may be extracted from the multi-correlator units and passed to a register bank at the appropriate times which correspond to the times in which the signal is in the vicinity of an initial acquisition threshold crossing. The microprocessor may then perform tracking and demodulation functions within its circuitry in a standard manner. The microprocessor feeds bock signals to the Doppler compensation circuitry, PN circuitry and dump gates in order to maintain proper tracking, during this operation.

For a tracking operation, register bank 324 receives a tracking signal 327a from multi-correlator unit 301. Tracking signal 327a is generated from the output of 32-stage delay circuit 308 for the first multi-correlator unit. It should be noted, however, that tracking signal 327a could also be generated from the output of any of the other 64 multi-correlator units 303-307, or a multiplexed output from any combination of the multi-correlater units 301-307. According to one embodiment of the present invention, register bank 324 receives separate tracking, signals 327b-327n from each of the parallel correlator circuits for channels 2-N within correlator circuit 208.

According to an alternative embodiment of the present invention, the parallel correlator circuit 300 may be reduced in complexity by not processing in parallel 2046 lags but only a subset of 2046 lags. In this case, parallel correlator circuit 300 would "step" through a portion of such lags at a time.

According to a further alternative embodiment of the present invention, it is possible to utilize the circuitry of parallel correlators 300 solely to perform acquisition, and to use entirely separate circuitry from parallel correlator 300 to perform the tracking operations.

U.S, Patent No. 4,426,712 to Gorski-Popiel describes another technique for providing parallel correlation in global positioning system receivers.

### Timing Analysis

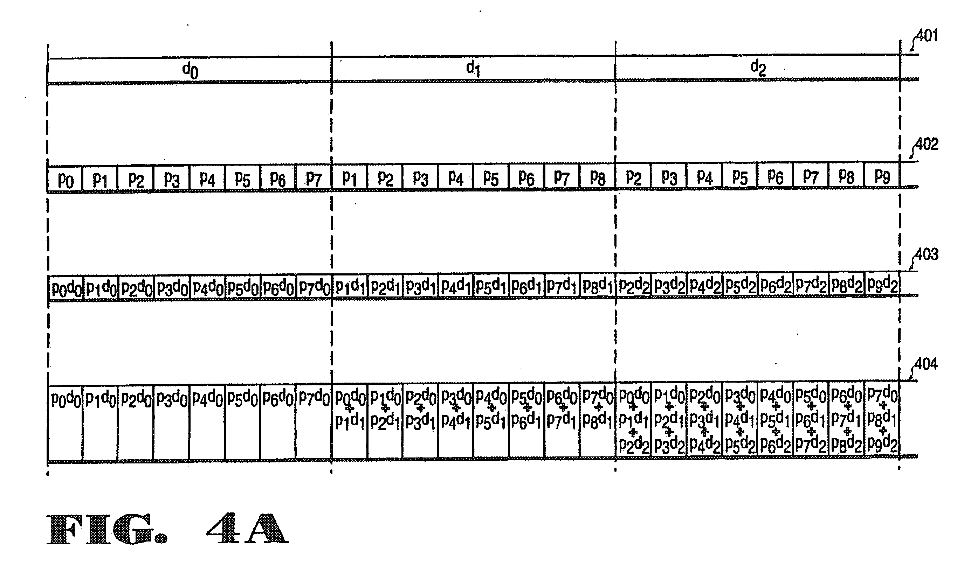

Figure 4A provides a timing and data analysis of the operation of the multi-correlators unit 301 of Figure 3A. For illustrative purposes, the input and Doppler compensation circuitry 336 and 334 are initially ignored. Also for simplicity, it is assumed that an 8-stage delay is used instead of a 32-stage delay for delay line 308. In Figure 4A, it is further assumed that the input sample rate of input signal 302 is one sample per chip and that data is real, rather than quadrature sampled.

At the beginning of the processing sequence, delay line 308 contains all zeros. The input data stream is denoted as D=d₀, d₁, d₂, ..., and is of a rate of approximately 1.023 Msamples per second. The locally generated PN stream is denoted by P₀=p₀, p₁, p₂, ...pₙ₋₁, p₀, p₁,p₂,...,pₙ₋₁,..., and consists of a series of numbers assuming values of +1 or 1. The period of the PN stream is n chips and this period is referred to as the "frames length".

A standard correlator, such as that illustrated in Figure 1, multiplies the input data stream (d₀, d₁, d₂,...) by the locally generated PN sequence (p₀, p₁, p₂, ...pₙ₋₁,p₀, p1, p2,...) and sums the result. If the input data stream contains a signal with this PN sequence, and if it is in time alignment with the PN sequence, a large output results. That is, in the absence of noise, if d₀= p₀, d₁= p₁, d₂= p₂, etc..., then, except for a possibly complex scale factor, the multiplication operation will remove the polarity inversions of the PN sequence and allow a coherent summation. If, however, the locally generated PN sequence is not time aligned with the input data stream D, another time alignment must be tried. The second time alignment typically consists of the original data stream shifted by one chip (or less for higher sample rates). These time displacements, or more precisely, circular shifts, are called "lags". For example, the new sequence P₁=d₁, d₂, d₃,... may be tried. In general then, at least 1023 different sequences, or lags of the original input data sequence must be tried in order to ensure that all possible phases of the input data relative to the locally generated PN have been examined. Again, it is assumed that the sample rate equals the chip rate. In practice, however, the signal sample rate is often two samples per chip and the delays between the locally generated PN sequence and the received data signal are adjusted in increments of one-half chip or less in order to avoid losses due to partial alignment.

As discussed above, conventional correlators either use one correlator element and sequentially try all phases of the local reference relative to the received signal, or else utilize a multiplicity of such elements in order to speed up the search time. Typically a correlator must integrate over approximately 10 PN frames (10 milliseconds) in order to achieve sufficient signal energy to ensure good probability of detection. Hence, searching over 1023 possible lags can take up to 10 seconds. This process must be performed for a multiplicity of the GPS signals that are received in order to provide timing information from at least four of the satellites in view (for a three position fix),

Figure 4A illustrates how multi-correlator unit 301 within parallel correlator 300 can compute the correlation function for a large number of lags, with a common set of hardware. In this case, the hardware requirement is much less than would be the case if separate correlators, utilizing separate hardware, were used. The input data stream 401 is denoted as D=d₀, d₁, d₂, ... The input data stream corresponds to input signal 302 which is input to adder 306 in multi-correlator unit 301. In Figure 4A, data stream 401 is illustrated as consisting of windows d₀, d₁, and d₂, it is understood however, that data stream 401 is typically of length 1023 for a standard C/A signal. The rate of data stream 401 is approximately 1.023 Msamples per second. The PN generator 312 produces a repetitive PN stream 402 denoted by P₀=p₀, p₁, p₂, ...pₙ₋₁, p₀, p₁, p₂,...,pₙ₋₁,... Figure 4A illustrates a PN stream 403 generated by PN generator 312 for n=8 (corresponding to a frame length of eight). Note that the PN generator is run (for this example) at a rate of 8 times the input data rate. Hence for the first input data word, the PN generator 312 cycles through the first 8 chips of the sequence. Each time the PN generator 312 is clocked, its output is multiplied by the input data word by the multiplier 304, passed through the adder 306 and placed in the delay line 308 (for this example the delay line of length eight).

The multiplication operation is illustrated as line 403 of Figure 4A which represents the data at the output of multiplier 304 within multi-correlator unit 301. Note that after the PN generator provides 8 chips, a new data sample enters (e.g., d₁ in place of d₀) and PN generator 312 is reset, but not to the phase that was used at the start of the previous signal sample. Instead, it is set to a phase displaced by one chip from that phase. For example, corresponding to data sample d₀, the successive PN chips provided by the generator 312 are p₀, p₁, p₂,...p₇. For the second data sample d₁, the PN chips provided are p₁, p₂, ... p₈, and so on.

Line 404 of Figure 4A illustrates the sequence of data provided at the output of adder 306 and stored in delay line 308. Line 404 represents a standard correlation between the sequence p₀, p₁, p₂,... and the data d₁, d₂, d₃, ... A correlation over one frame of data would be complete after n samples, where n equals the frame length. Examining the first output of the adder right after each sample arrives yields a first data sample of p₀d₀, a second data sample of p₀d₀+p₁d₁, a third data sample of p₀d₀+p₁d₁+p₂d₂, and so on. Examining the second outputs of adder 306 right after each data sample arrives yields p₁d₀, p₁d₀+p₂d₁, p₁d₀+p₂d₁+p₃d₂, and so on. This represents a correlation between the delayed sequence p₁, p₂, p₃, and the data, that is, a correlation with lag 1. Similarly, it is apparent that the successive outputs of adder 306 provided during each data sample period corresponds to lags 0 through 7. Effectively, the delay line 308 and the resetting of the PN generator 312 provides for a timesharing of multiple correlation lag channels, without any loss of information.

In practice, multi-correlator unit 301 would provide for 32 successive lags, rather than 8 in the above example. Furthermore, each of these lags would be one-half chip delayed relative to a prior lag, instead of one-chip delayed as in the above example. If multiple channels of multi-correlator units 301 are used, then each would be assigned a different set of lags and hence each would produce a PN sequence displaced in time from that of an adjacent channel by 32 lags. For example, if PN generator 312 of the first multi-correlator unit 301 produces the sequence p₀, p₁, ..., p₃₁, p₁, p₂, ..., p31, then the PN generator of the second multi-correlator unit 303 would simultaneously produce the sequence p32, p33, ..., p63, p33, p34, ...., p63. Clearly then, 64 of these multi-correlator channels 301-307 will produce all the lags for an entire PN frame. This corresponds to 2046 lags for 1023 chips delayed by one-half chip per lag. The last two lags, provided by multi-correlator unit 307, are extraneous (actually they are the same as lags 0 and 1), since the frame length is 1023 chips or 2046 half chips.

The correlation outputs from the delay line of each multi-correlator channel are passed through magnitude-squaring circuits (e.g., 314). The correlation process cannot be run indefinitely since data phase inversions in the received signal will end the coherent integration gain; in addition small Doppler errors will also end this gain. Often the correlation process is ended after each PN frame period, and the dump gate 310 is opened at this time for 32 successive PN samples, to allow correlation to begin anew. The data from the previous correlation period is passed through the aforementioned magnitude-squaring circuit 314 and then combined with similar outputs from other correlation channels 303, 305, etc. (if present), through multiplexer 316. For this purpose, it may be advantageous to have the dump gates 310 of the various multi-correlator units (301,303,305, etc.) operate at times displaced from one another, In this case, the operation of multiplexing all the data from the various channels into one stream is simplified.

For example, in Figure 3A, at the end of a PN frame, multi-correlator unit 301 produces 32 successive lag outputs corresponding to one entire PN frame. If the time of the dump gate opening of multi-correlator unit 303 is displaced in time by 32 clock cycles, then the data provided by multi-correlator unit 303 at the end of a PN frame will not overlap in time the data from multi-correlator unit 301. Thus, events can be timed such that 2046 samples would be burst out through multiplexer 316 at the end of each PN frame without overlapping one another in time. This data, which has been squared in magnitude (or "detected"), then enters the delay line integrator made up of 2046-stage delay line 328 and adder 332. This circuit adds the detected data from one PN frame to that from the previous frames. This is due to the fact that the delay line 328 exactly equals the length of one PN frame, so that data emerging from it arrives exactly at a time coincident with one PN frame duration. The summation operation performed by adder 332 continue as long as desired, consistent with desired signal sensitivity and acquisition time, and is terminated by dump gate 330 being opened for one PN interval. Data from the delay-line integrator is compared to a detection threshold in comparator 326 to detect the presence of a signal. Comparator 326 generates an alarm signal 325a to processor 322 upon a threshold crossing. This alarm signal allows the measurement of time-of-arrival through the time that such an alarm is sent. The times of the alarm interrupts may be read by processor 322 using an internal counter (not shown) within the processor, or one external to it.

The values of the data at the threshold crossing and in the vicinity of the threshold crossing may be used together with standard interpolation algorithms to refine the precise location of the correlation peak. The data magnitudes may be stored in register bank 324 to allow this interpolation to be performed by processor 322. This approach can permit measurement of such an arrival time to an accuracy as much as 100 times better than the time interval between data samples (which is approximately 500 nanoseconds).

As illustrated in Figure 2, processor 322 may receive threshold crossing information from a multiplicity of channels, 1-N. In this case, each channel may be assigned to a PN code for a unique satellite. In an alternative embodiment of the present invention, one or more channels may sequentially search through a series of PN codes. In a further alternative embodiment, several channels may be assigned the same PN code but different Dopplers (through Doppler compensation circuit 334). This may be an effective acquisition strategy when the initial Doppler uncertainty is high and where certain satellites are preferable (e.g., higher in the sky).

Following the above initial acquisition, if a sufficiently high signal-to-noise ratio is available, a tracking process may begin in which the PN epochs and carrier are continuously tracked and the satellite data message may be read by removal of the PN data. These operations may be performed by setting a group of correlators to epochs that are in the vicinity of the time of the threshold crossing of a particular satellite. During this time, the dump gate 310 is normally set to a rate that is a multiple of the data rate, e.g., 100 Hz. The correlator output is taken in pre-detected (in-phase/quadrature) form just prior to magnitude-square block 314, and stored in register bank 324 which is accessible by processor 322. Storage of pre-detection data preserves signal phase information and is necessary to perform carrier tracking and data demodulation. The PN tracking loop can force the location of the correlation peak to stay in a particular time position by means of a control signal from the processor sent to the clocking mechanism of PN generator 312. This control signal causes the PN generator to advance or retard its phase in order to keep the correlation peak location fixed. Similarly the information in register bank 324 may be used by processor 322 to compute any error in carrier frequency using a standard phase-lock loop tracking method (e.g., a Costas loop). The processor 322 then feeds back correction frequencies to the Doppler compensation digital oscillator 334 to force the carrier frequency out of multiplier 336 to be zero.

Following carrier and PN tracking operations, data collected in register bank 324 has the PN component removed so that this data may be read. The processor 322 controls dump gate 310 so that the dump times are properly aligned with the data boundaries. This may be accomplished by utilizing a data tracking loop within processor 322, and providing a feedback signal to dump gate 310, and each of the dump gates is the other multi-correlator units 303-307. Alternatively, if the dump rate, is very high (e.g., 1 kHz), then processor 322 may perform all such data tracking itself by manipulating the data stored in register bank 324, without such dump gate feedback. This latter approach, however, requires higher processor speed.

As illustrated in Figure 3A, one group of 32 multi-correlator units 301 per satellite signal being tracked is more than adequate to provide the necessary information for tracking and demodulation of satellite signals. In fact, during tracking, only the peak correlator output and those just prior to and after the peak need be utilized for these functions. The additional multi-correlator units of a group like 301 can be used for dropout situations to rapidly re-search for the location of a correlation peak that may have moved during this dropout period.

### Alternative Parallel Correlator

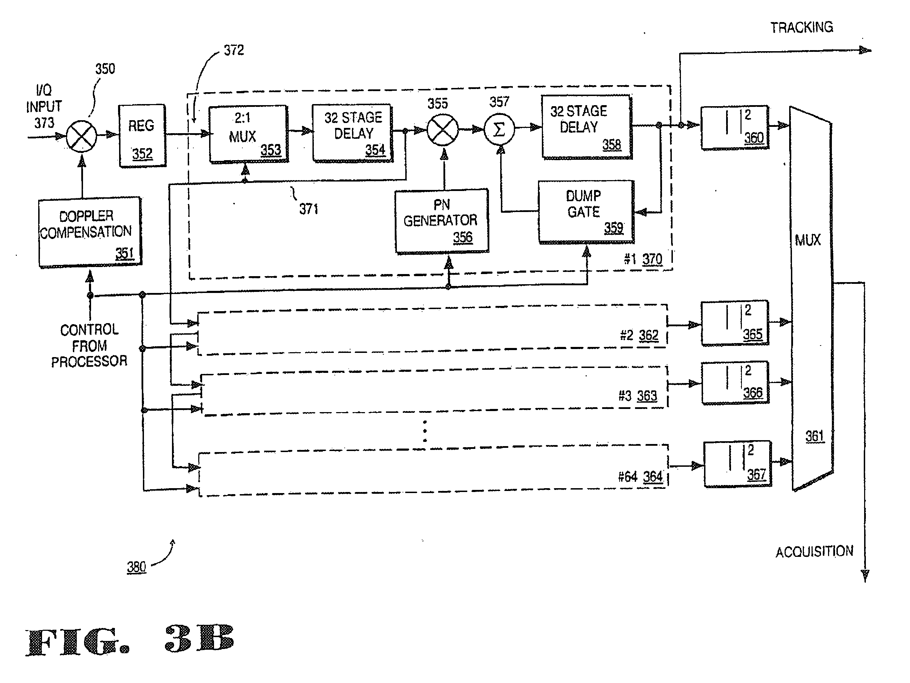

Figure 3B provides a detailed block diagram of a parallel correlator circuit according to an alternative embodiment of the present invention. Unlike the parallel correlator illustrated in Figure 3A which computes the correlation function for multiple lags by correlating a common portion of the input data stream (d₀, d₁, d₂,...) against multiple PN sequences, each displaced from one another by one chip, the alternate parallel correlator of Figure 3B uses a common portion of the PN signal which is correlated against delayed versions of the input data stream. The parallel correlator of Figure 3B is similar to the parallel correlator of Figure 3A with the addition of an extra delay line loop in the signal path prior to the PN generator/mixer circuit.

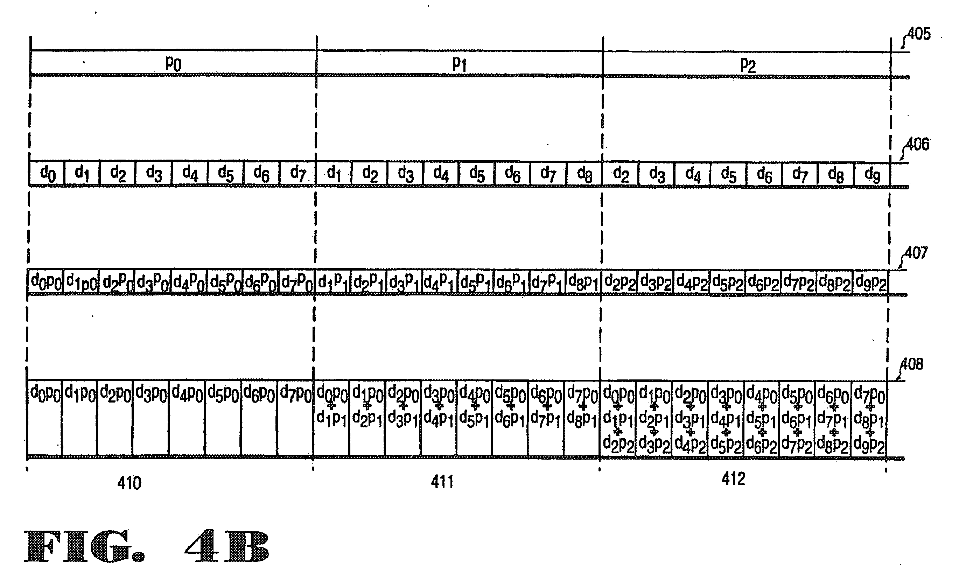

Figure 4B provides a timing and data analysis of the operation of the multi-correlator unit of Figure 3B. For illustrative purposes, the input and Doppler compensation circuitry is initially ignored. For further clarity, it is assumed that an 8-stage delay is used instead of a 32-stage delay for delay line 308. In Figure 4B, it is also assumed that the input sample rate of input signal is one sample per chip and that data is real, rather than quadrature sampled. Figure 4B is similar to Figure 4A, except that the p and d terms, corresponding to the PN and data sequences respectively, are reversed.

Like the parallel correlator of Figure 3A, the parallel correlator 380 of Figure 3B effectively implements 2046 individual correlator circuits, The input signal is input in parallel to 64 separate multi-correlator units. Multi-correlator unit 370 illustrates the components within each multi-correlator unit. Figure 3B contains block structures for the second unit 362, the third unit 363, and the 64th unit 364. It should be understood that the structures for multi-correlator units 2-64 contain the same elements illustrated in first multi-correlator unit 370. As illustrated for the first unit 370, each multi-correlator unit contains a PN generator 356 that is time shared among 32 successive PN one-half chip phases, or "lags".

In Figure 3B, an I/Q input signal 373 is passed through the Doppler compensation circuitry containing compensation circuit 351 and multiplier 350, and is then loaded into register 352. The multi-correlator unit 370 is run at 32 times the rate at which register 352 is loaded, that is, 32 operations take place each time a new word of data is loaded into register 352. As stated earlier, the following discussion assumes that 8-stage delays are used instead of the 32 indicated in Figure 3B, and that the sample rate is one sample per PN chip. It is assumed initially that the delay line 354 contains input data d₀...d₇ where these data words are in time sequence (i.e., d₀ comes first, and d₇ comes last), and d₀ is at the very right of the shift register delay line 354 and d₇ is at the left. The data in delay line 354 is multiplied by the first PN chip from PN generator 356 using multiplier 355, and then stored in the loop accumulator containing adder 357, delay line 358, and dump gate 359.

As shown in the timing diagram of Figure 4B, the first chip p₀ is multiplied by the first data word do by multiplier 355 and then placed into delay line 358, Delay line 358 is assumed to be initially empty and dump gate 359 is placed in the closed (that is, pass through) position. The shift register delay lines 354 and 358 are then circularly shifted. Multiplexer 353 is placed in position so that the bottom path 371 is selected. This places the data word d₁ at the end of delay line 354. Data word d₁ is then multiplied by the same PN coefficient p₀ by multiplier 355 and placed in the delay line 358. At this point the delay line contains the terms d₀p₀ and d₁p₀, as shown in block 410 (corresponding to line 408 for group p₀). Similarly the next six clock periods store into delay line 358 the data d₂p₀, d₃p₀, ..., d₇p₀. At this point the multiplexer 353 is set to receive data from the upper path 372 (data word d₈). Register 352, delay line 354, and PN Generator 356 are then clocked once, but delay line 358 is not clocked at this time. This results in delay line 354 containing data words d₁...d₈, when PN generator 356 produces output p₁.

The PN generator 356 next produces output p₁, The data word d₀ that was previously at the output of delay line 354 is discarded and multiplexer 353 is configured to accept data from the bottom path 371 to permit a circular shifting operation. The next 8 high speed clock cycles perform the same computations described above in which both delay line 354 and delay line 358 are circularly shifted and the contents of delay line 358 are added to the data from delay line 354. The adder circuit 357 provides the accumulation function. The output of these operations is illustrated in the p₁ group of Figure 4B, with the results shown in block 411 (corresponding to line 408 for group p₁). After these eight cycles, register 352, delay line 354, and PN generator 356 are again clocked once with multiplexer 353 set to the upper position. Again, delay line 358 is not clocked during this period, so that at this point, delay line 354 contains data words d₂...d₉, when PN generator 356 produces output p₂.

The PN generator 356 next produces output p₂. The above mentioned eight cycle process is once again performed, and the result is shown in block 412 (corresponding to line 408 for group p₂). This entire process repeats until a frame of 1023 samples of data (or multiple thereof) are processed (in a typical embodiment). At this point the dump gate 359 may be placed in an open condition so that a new set of data may be accumulated by delay line 358.

The correlation output from delay line 358 of multi correlator 370 provides a tracking signal for the I/Q input signal. This output is also input to magnitude-squaring circuit 360. Similarly, the output front each of the other multi-correlator channels (362, 363, 364) are passed through respective magnitude-squaring circuits (e.g., 365, 366, 367). The data from each magnitude-squaring circuit is combined with similar outputs from the other correlation channels through multiplexer 361 to produce the acquisition signal for the I/Q input signal.

In Figure 4B, the last eight sums 412 shows a correlation of the data sequence d₀, d₁, d₂, ... against the PN sequence p₀, p₁, _{P2}, ... for eight successive lags (relative phasings between the two sequences). It will be appreciated that this result is very similar to the result illustrated in the Figure 4A timing diagram with some subtle differences. As shown in Figure 4A, the same data block is correlated against shifted versions of the PN sequence. In Figure 4B, the same PN block is correlated against different data blocks. For most situations the difference is inconsequential. However, the circuitry of Figure 3A is simpler than that of Figure 3B and hence would normally be preferred.

As mentioned previously the multicorrelators 362, 363, ... 364 each contain the same circuitry as multicorrelator 370. However, the data input to 362 (multicorrelator #2) is fed from the output of the 32-stage delay line 354 of the previous multicorrelator 370 (multicorrelator #1), and similarly, the 32-stage delay line of multicorrelator 362 feeds the input of multicorrelator 363, and so on. Thus, at the beginning of a 32 clock processing cycle, the data in the 32-stage delay line of multi-correlator 370 is delayed from the corresponding data in the 32-stage delay line of multicorrelator 362 by 32 samples, and that data in the 32-stage delay line of multicorrelator 362 is delayed from the corresponding data of multicorrelator 363 by another 32 samples, and so on. Thus, the collection of all multicorrelator circuits 370, 362, 363, ... 364 are processing 2046 successive data samples with the same PN generator. Therefore, although Figure 3B indicates that one PN generator is used per multicorrelator, one PN generator for the entire set of 64 multicorrelators can be utilized. That is, the output of the PN generator 356 can be sent to the mixers (corresponding to mixer 355) in each of the other multicorrelator circuits 362, 363, ... 364. In this simplified construction, the multicorrelator circuits 362, 363, ... 364 may have their PN generators deleted.

In an alternative embodiment of the parallel correlator 380 illustrated in Figure 3B, the output of register 352 is input in parallel to all 64 multicorrelators, instead of each multi-correlator feeding data to the succeeding one. In this case 64 different PN generators (or one PN generator with 64 different outputs) are required, where the outputs of the PN generators of succeeding multicorrelators are displaced in time (or phase) from one another by minus 32 half-chips. In effect, this approach combines correlator 300 of Figure 3A with the previously described correlator 380 of Figure 3B. In this case, each multicorrelator processes 32 different correlation lags by delaying the input signal relative to a fixed PN sequence, but different multicorrelators ensure that different groups of 32 lags are processed by delaying the PN phase relative to the previous multi-correlator by 32 lags.

### GPS Receiver

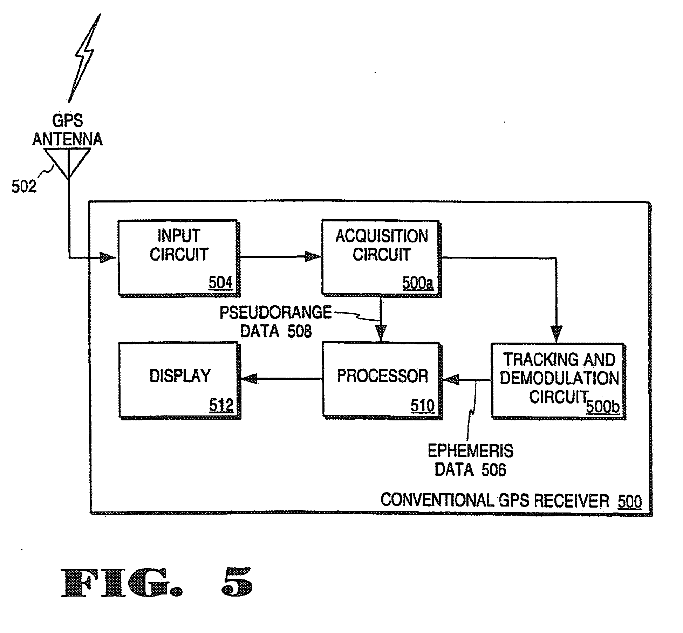

Figure 5 illustrates the implementation of correlator circuit 300 in a conventional GPS receiver 500 according to one embodiment of the present invention. The GPS receiver is conventional in the sense that it receives GPS signals and determines pseudoranges and also reads the satellite data messages in the GPS signals in order to determine satellite ephemeris, and then also determines the position of the receiver from the pseudoranges and the ephemeris. GPS signals are received by GPS antenna 502 and input to GPS receiver 500 through input circuit 504. The PN codes within the received GPS signals are acquired and tracked in acquisition circuit 500a together with an external processor 510 in accordance with the operation described above with respect to Figures 2-4. The output of acquisition circuit 500a comprises the pseudorange data 508 corresponding to the signals received from each GPS satellite from which a signal was receive. Each satellite also transmits ephemeris data 506 which is received by input circuit 504 and demodulated by tracking and demodulation circuit 500b. Processor 510 processes the ephemeris and pseudorange data to determine the location of the receiver 500. The output of processor 510 drives an input/output device such as display device 512 which graphically or textually displays the location of the receiver. In this configuration, the circuit of Figure 3A performs both the acquisition and tracking functions together with processor 510.

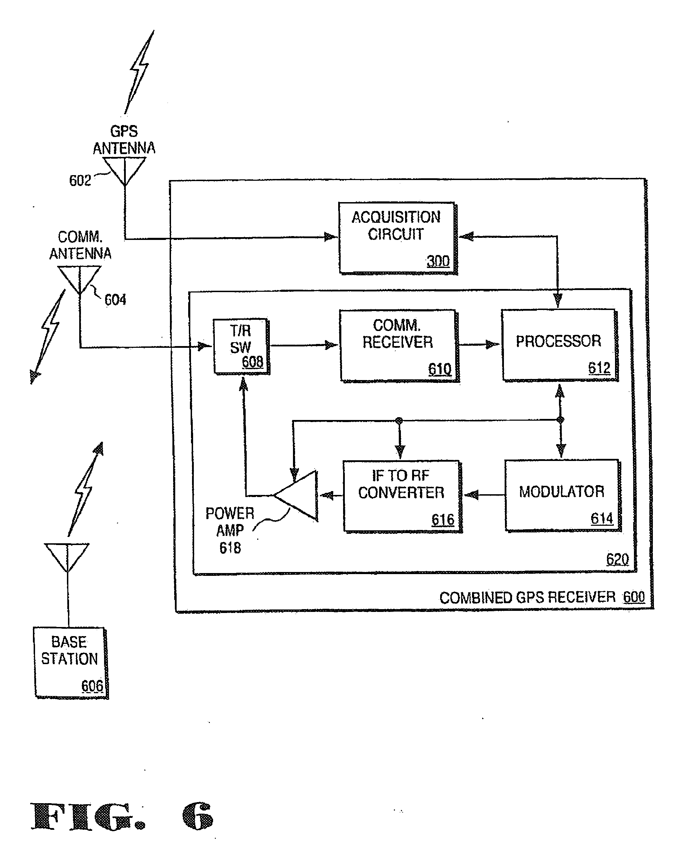

Figure 6 illustrates the implementation of acquisition circuit in a GPS receiver 600 according to an alternative embodiment of the present invention. GPS receiver 600 is a combined GPS and communication receiver transmitter. Receiver 600 contains a GPS receiver stage including acquisition circuit 300 and communication transceiver section 620. GPS signals are received through GPS antenna 602 and input to acquisition circuit 300 which acquires the PN codes for the various received satellites. The pseudorange data produced by acquisition circuit 300 are processed by processor 612 for transmittal by transceiver 620. Transceiver 620 contains a transmit/receive switch 608 which routes communication signals (typically RF) to and from communication antenna 604 and receiver 600. Received communication signals are input to communication receiver 610 and passed to processor 612 for processing. Communication signals to be transmitted from processor 612 are propagated to modulator 614 and frequency converter 616. Power amp 618 increases the gain of the signal to an appropriate level for transmission to base station 606. In the combined GPS/communicatio,n system of receiver 600, pseudorange data generated by acquisition circuit 600 is transmitted over a communication link to base station 606. Base station 606 then determine the location of receiver 600 based on the pseudorange data from the remote receiver and ephemeris data received from its own GPS receiver or other sources of such data. The location data can then be transmitted back to GPS receiver 600 or to other remote locations. The communication link between receiver 600 and base station 606 may be implemented in a number of various embodiments including a direct link or cellular phone link.

Although the methods and apparatus of the present invention have been described with reference to GPS satellites, it will be appreciated that the teachings are equally applicable to positioning systems which utilize pseudolites or a combination of satellites and pseudolites. Pseudolites are ground based transmitters which broadcast a PN code (similar to a GPS signal) modulated on an L-band carrier signal, generally synchronized with GPS time. Each transmitter may be assigned a unique PN code so as to permit identification by a remote receiver. Pseudolites are useful in situations where GPS signals from an orbiting satellite might by unavailable, such as tunnels, mines, buildings or other inclosed areas. The term "satellite", as used herein, is intended to include pseudolites or equivalents of pseudolites, and the term GPS signals, as used herein, is intended to include GPS-like signals from pseudolites or equivalents of pseudolites.

In the preceding discussion the invention has been described with reference to application upon the United States Global Positioning Satellite (GPS) system. It should be evident, however, that these methods are equally applicable to similar satellite positioning systems, such as the Russian Glonass system. The term "GPS" used herein includes such alternative satellite positioning systems, including the Russian Glonass system. The term "GPS signals" includes signals from alternative satellite positioning systems.

## Claims

1. A method of processing satellite positioning system (SPS) signals, said method comprising the steps of:
receiving SPS signal samples from a particular SPS transmitter;
performing a first correlation on a pseudorandom sequence with a first set of said SPS signal samples using a first multiplier and adder to provide a first correlated result; and
performing a second correlation on said pseudorandom sequence with a second set of said SPS signal samples using said first multiplier and adder to provide a second correlated result, **characterised in that** the method further comprises:
circularly shifting the samples in the first and second sets of said SPS signal samples in a delay line placed prior said first multiplier and adder and circularly shifting correlated samples at the first and second sets at said SPS signal samples in a delay line placed after said first multiplier and adder, wherein said second correlation is performed in parallel with said first correlation through time sharing of said first multiplier and adder and wherein said second set corresponds to said first set of said SPS signal samples shifted in time.

2. The method according to claim 1 further comprising the step of performing additional correlations on said pseudorandom sequence with additional sets of said SPS signal samples using said first adder and multiplier to provide additional correlated results, and wherein each set of said additional sets corresponds to said first set shifted in time.

3. The method according to claim 2 wherein said pseudorandom sequence comprises a sequence of values generated within fixed intervals and wherein said first correlation, said second correlation, and said additional correlations are updated during each of said fixed intervals.

4. The method according to claim 2 wherein said first correlation, said second correlation, and said additional correlations together form a multi-correlation operation, and further comprising the step of inputting said SPS signal samples in parallel to a plurality of correlator units, and wherein
a first correlator unit of said plurality of correlator units performs a first multi-correlation operation on said pseudorandom sequence; and
one or more additional correlator units of said plurality of correlator units perform respective multi-correlation operations on said pseudorandom sequence, and wherein relative time shifts utilized for correlations in each of said plurality of correlator units are not identical.

5. The method according to claim 4 wherein each of said first multi-correlation operation and said one or more additional multi-correlation operations produce correlated data results, each of said correlated data results being updated within the same fixed interval.

6. The method according to claim 4 wherein at the end of a period of time corresponding to a plurality of said fixed intervals, a mathematical representation of said correlated data results is produced to form a group of terminal results corresponding to said period of time.

7. The method according to claim 6 further comprising the step of summing said group of terminal results with one or more groups of terminal results corresponding to different periods of time.

8. The method according to claim 2 further comprising the step of comparing a unique identification code contained within said set of SPS signal samples with a locally generated identification code, and wherein each of said first correlated result, said second correlated result, and said additional correlated results comprises the result of a comparison of each phase of said unique identification code with a corresponding phase of said locally generated identification code.

9. A circuit for processing satellite positioning system (SPS) signals, said circuit comprising the following:
an input signal port (350) for receiving SPS signal samples from a particular SPS transmitting vehicle;
a parallel correlator circuit (380) coupled to said input signal port, said parallel correlator circuit comprising one or more correlation circuits (370), each correlation circuit of said one or more correlation circuits configured for performing a first correlation on a pseudorandom sequence with a first set of said SPS signal samples using a first multiplier and adder (355, 357) to provide a first correlated result, and performing a second correlation on said pseudorandom sequence with a second set of said SPS signal samples using said first multiplier and adder to provide a second correlated result, **characterised in that** said correlation circuits (370) further comprise delay lines (354, 358) placed prior and after said first multiplier and adder (355, 357), wherein said second correlation is performed in parallel with said first correlation through time sharing of said first multiplier and adder (355, 357), said delay lines (354, 358) being configured to circularly shift the samples and the correlated samples of the first and second sets of said SPS signal samples respectively, wherein said second set corresponds to said first set sequence shifted in time;
a post-detection integrator circuit (326, 328, 332) coupled to said parallel correlator circuit for detecting signal peaks contained within an output signal of said parallel correlator circuit;
a processor (322) coupled to an output of said post-detection integrator circuit; and
a register bank (324) coupled to said processor.

10. The circuit according to claim 9 wherein each correlation circuit of said one or more correlation circuits is further configured for performing additional correlations on said pseudorandom sequence with additional sets of said SPS signal samples using said first adder and multiplier to provide additional correlated results, and wherein each set of said additional sets corresponds to said first set shifted in time.

11. The circuit according to claim 10 wherein each of said one or more correlation circuits comprises:
a local identification code generator (356);
a multiple stage delay line (358) coupled to said local identification code generator; and
an adder circuit (357) coupled to said multiple stage delay line through a feedback loop.

12. A computer readable medium comprising at least one instruction for causing a computer to perform a method in accordance with claims 1 to 8.

## Patentansprüche

1. Verfahren zum Verarbeiten von Signalen eines Satellitenpositionsbestimmungssystems (SPS), wobei das Verfahren die Schritte aufweist:
Empfangen von SPS-Signalsamples von einem bestimmten SPS-Transmitter;
Ausführen einer ersten Korrelation an einer Pseudozufallssequenz mit einem ersten Satz der SPS-Signalsamples unter Verwendung eines ersten Multiplizierers und Addierers, um ein erstes korreliertes Ergebnis bereitzustellen; und
Ausführen einer zweiten Korrelation an der Pseudozufallssequenz mit einem zweiten Satz der SPS-Signalsamples unter Verwendung des ersten Multiplizierers und Addierers, um ein zweites korreliertes Ergebnis bereitzustellen, **dadurch gekennzeichnet, dass** das Verfahren ferner umfasst:
kreisförmiges Verschieben der Samples in den ersten und zweiten Sätzen der SPS-Signalsamples in einer Verzögerungsleitung, die vor dem ersten Multiplizierer und Addierer platziert ist, und kreisförmiges Verschieben korrelierter Samples der ersten und zweiten Sätze der SPS-Signalsamples in einer Verzögerungsleitung, die nach dem ersten Multiplizierer und Addierer platziert ist, wobei die zweite Korrelation parallel mit der ersten Korrelation durch ein Zeitanteilsverfahren des ersten Multiplizierers und Addierers ausgeführt wird und wobei der zweite Satz dem ersten Satz der SPS-Signalsamples, zeitlich verschoben, entspricht.

2. Verfahren nach Anspruch 1, ferner mit dem Schritt des Durchführens zusätzlicher Korrelationen an der Pseudozufallssequenz mit zusätzlichen Sätzen der SPS-Signalsamples unter Verwendung des ersten Addierers und Multiplizierers zur Bereitstellung zusätzlicher korrelierter Ergebnisse und wobei jeder Satz der zusätzlichen Sätze dem ersten Satz, zeitlich verschoben, entspricht.

3. Verfahren nach Anspruch 2, die Pseudozufallssequenz eine Sequenz von Werten umfasst, die innerhalb festgelegter Intervalle erzeugt werden, und wobei die erste Korrelation, die zweite Korrelation und die zusätzlichen Korrelationen während jedes der festgelegten Intervalle aktualisiert werden.

4. Verfahren nach Anspruch 2, wobei die erste Korrelation, die zweite Korrelation und die zusätzlichen Korrelationen zusammen eine Multi-Korrelationsoperation bilden, und fermer mit dem Schritt des parallelen Eingebens der SPS-Signalsamples in eine Mehrzahl von Korrelationseinheiten, und wobei
eine erste Korrelationseinheit der Mehrzahl von Korrelationseinheiten eine erste Multi-Korrelationsoperation an der Pseudozufallssequenz ausführt; und
eine oder mehrere Korrelationseinheiten der Mehrzahl von Korrelationseinheiten entsprechende Multi-Korrelationsoperationen an der Pseudozufallssequenz ausführen und wobei relative Zeitverschiebungen, die für Korrelationen in jeder der Mehrzahl von Korrelationseinheiten verwendet werden, nicht identisch sind.

5. Verfahren nach Anspruch 4, wobei jede der ersten Multi-Korrelationsoperationen und die eine oder mehreren zusätzlichen Multi-Korrelationsoperationen korrelierte Datenergebnisse hervorbringen, wobei jedes der korrelierten Datenergebnisse innerhalb des gleichen festgelegten Intervalls aktualisiert wird.

6. Verfahren nach Anspruch 4, wobei am Ende einer Zeitperiode, welche einer Mehrzahl der festgelegten Intervalle entspricht, eine mathematische Darstellung der korrelierten Datenergebnisse erzeugt wird, um eine Gruppe von endgültigen Ergebnissen zu bilden, welche der Zeitperiode entsprechen.

7. Verfahren nach Anspruch 6, ferner mit dem Schritt des Summierens der Gruppe von endgültigen Ergebnissen mit einer oder mehreren Gruppen von endgültigen Ergebnissen, die anderen Zeitperioden entsprechen.

8. Verfahren nach Anspruch 2, ferner mit dem Schritt des Vergleichens eines in dem Satz von SPS-Signalsamples enthaltenen eindeutigen Identifikationscodes mit einem lokal erzeugten Identifikationscode und wobei jedes des ersten korrelierten Ergebnisses, des zweiten korrelierten Ergebnisses und der zusätzlichen korrelierten Ergebnisse das Ergebnis eines Vergleichs jeder Phase des eindeutigen Identifikationscodes mit einer entsprechenden Phase des lokal erzeugten Identifikationscodes umfasst.

9. Schaltung zur Verarbeitung von Signalen eines Satellitenpositionsbestimmungssystems (SPS), wobei die Schaltung das Folgende aufweist:
einen Eingangs-Signalport (350) zum Empfangen von SPS-Signalsamples von einem bestimmten SPS-übertragenden Vehikel;
einer parallelen Korrelationsschaltung (380), welche mit dem Eingangs-Signalport gekoppelt ist, wobei die parallele Korrelationsschaltung eine oder mehrere Korrelationsschaltungen (370) umfasst, wobei jede Korrelationsschaltung der einen oder mehreren Korrelationsschaltungen zum Ausführen einer ersten Korrelation an einer Pseudozufallssequenz mit einem ersten Satz der SPS-Signalsamples unter Verwendung eines ersten Multiplizierers und Addierers (355, 357) konfiguriert ist, um ein erstes korreliertes Ergebnis bereitzustellen, und Ausführen einer zweiten Korrelation an der Pseudozufallssequenz mit einem zweiten Satz der SPS-Signalsamples unter Verwendung des ersten Multiplizierers und Addierers, um ein zweites korreliertes Ergebnis bereitzustellen, **dadurch gekennzeichnet, dass** die Korrelationsschaltungen (370) ferner Verzögerungsleitungen (354, 358) umfassen, die vor und nach dem ersten Multiplizierer und Addierer (355, 357) platziert sind, wobei die zweite Korrelation parallel mit der ersten Korrelation durch ein Zeitanteilsverfahren des ersten Multiplizierers und Addierers (355, 357) ausgeführt wird, wobei die Verzögerungsleitungen (354, 358) jeweils zum kreisförmigen Verschieben der Samples und der korrelierten Samples der ersten und zweiten Sätze der SPS-Signalsamples konfiguriert sind, wobei der zweite Satz der ersten Satzsequenz, zeitlich verschoben, entspricht;
eine Nacherfassungs-Integratorschaltung (326, 328, 332), die mit der parallelen Korrelationsschaltung zum Erfassen von Signalspitzen gekoppelt ist, die in einem Ausgabesignal der parallelen Korrelationsschaltung enthalten sind;
einen Prozessor (322), der mit einem Ausgang der Nacherfassungs-Integratorschaltung gekoppelt ist; und
einer mit dem Prozessor gekoppelten Registerbank (324).

10. Schaltung nach Anspruch 9, wobei jede Korrelationsschaltung der einen oder mehreren Korrelationsscllaltungen ferner konfiguriert ist, um zusätzliche Korrelationen an der Pseudozufiaflssequenz mit zusätzlichen Sätzen der SPS-Signalsamples unter Verwendung des ersten Addierers und Multiplizierers auszuführen, um zusätzliche korrelierte Ergebnisse bereitzustellen, und wobei jeder Satz der zusätzlichen Sätze dem ersten Satz, zeitlich verschoben, entspricht.

11. Schaltung nach Anspruch 10, wobei jede der einen oder mehreren Korrelationsschaltungen umfasst:
einen lokalen Identifikationscadeerzeuger (356);
eine mehrstufige Verzögerungsleitung (358), die mit dem lokalen Identifikationscodeerzeuger gekoppelt ist; und
eine Addierschaltung (357), die mit der mehrstufigen Verzögerungsleitung durch eine Feedback-Schleife gekoppelt ist.

12. Computerlesbares Medium mit zumindest einer Anweisung, um einen Computer zu veranlassen, ein Verfahren nach den Ansprüchen 1 bis 8 durchzuführen.

## Revendications

1. Procédé de traitement de signaux d'un système de positionnement par satellite (SPS), ledit procédé comprenant les étapes consistant à :
recevoir des échantillons de signaux SPS d'un émetteur SPS particulier ;
réaliser une première corrélation sur une séquence pseudo-aléatoire avec une première série desdits échantillons de signaux SPS au moyen d'un premier multiplicateur et additionneur afin de fournir un premier résultat corrélé ; et
réaliser une deuxième corrélation sur ladite séquence pseudo-aléatoire avec une deuxième série desdits échantillons de signaux SPS au moyen dudit premier multiplicateur et additionneur afin de fournir un deuxième résultat corrélé, **caractérisé en ce que** le procédé comprend en outre l'étape consistant à :
décaler de façon circulaire les échantillons dans les première et deuxième séries desdits échantillons de signaux SPS dans une ligne à retard placée avant ledit premier multiplicateur et additionneur, et décaler de façon circulaire les échantillons corrélés des première et deuxième séries desdits échantillons de signaux SPS dans une ligne à retard placée après ledit premier multiplicateur et additionneur, dans lequel ladite deuxième corrélation est réalisée parallèlement à ladite première corrélation via un partage de temps dudit premier multiplicateur et additionneur, et dans lequel ladite deuxième série correspond à ladite première série desdits échantillons de signaux SPS décalés dans le temps.

2. Procédé selon la revendication 1, comprenant en outre l'étape consistant à réaliser des corrélations supplémentaires sur ladite séquence pseudo-aléatoire avec des séries supplémentaires desdits échantillons de signaux SPS au moyen dudit premier multiplicateur et additionneur afin de fournir des résultats corrélés supplémentaires, et dans lequel chaque série desdites séries supplémentaires correspond à ladite première série décalée dans le temps.

3. Procédé selon la revendication 2, dans lequel ladite séquence pseudo-aléatoire comprend une séquence de valeurs générées à intervalles fixes, et dans lequel ladite première corrélation, ladite deuxième corrélation et lesdites corrélations supplémentaires sont mises à jour pendant chacun desdits intervalles fixes.

4. Procédé selon la revendication 2, dans lequel ladite première corrélation, ladite deuxième corrélation et lesdites corrélations supplémentaires forment ensemble une opération de multicorrélation, et comprenant en outre l'étape consistant à entrer lesdits échantillons de signaux SPS en parallèle dans une pluralité d'unités corrélatrices, et dans lequel
une première unité corrélatrice de ladite pluralité d'unités corrélatrices réalise une première opération de multicorrélation sur ladite séquence pseudo-aléatoire ; et
une ou plusieurs unités corrélatrices supplémentaires de ladite pluralité d'unités corrélatrices réalisent des opérations de multicorrélation respectives sur ladite séquence pseudo-aléatoire, et dans lequel les décalages de temps relatifs utilisés pour les corrélations dans chaque unité corrélatrice de ladite pluralité d'unités corrélatrices ne sont pas identiques.

5. Procédé selon la revendication 4, dans lequel chaque opération parmi ladite première opération de multicorrélation et ladite ou lesdites une ou plusieurs opérations de multicorrélation supplémentaires produit des résultats de données corrélés, chacun desdits résultats de données corrélés étant mis à jour dans le même intervalle fixe.

6. Procédé selon la revendication 4, dans lequel à la fin de la période de temps correspondant à une pluralité desdits intervalles fixes, une représentation mathématique desdits résultats de données corrélés est produite afin de former un groupe de résultats finaux correspondant à ladite période de temps.

7. Procédé selon la revendication 6, comprenant en outre l'étape consistant à additionner ledit groupe de résultats finaux à un ou plusieurs groupes de résultats finaux correspondant à différentes périodes de temps.

8. Procédé selon la revendication 2, comprenant en outre l'étape consistant à comparer un code d'identification unique, contenu dans ladite série d'échantillons de signaux SPS, à un code d'identification généré localement, et dans lequel chacun dudit premier résultat corrélé, dudit deuxième résultat corrélé et desdits résultats corrélés supplémentaires comprend le résultat d'une comparaison de chaque phase dudit code d'identification unique à une phase correspondante dudit code d'identification généré localement.

9. Circuit de traitement de signaux d'un système de positionnement par satellite (SPS), ledit circuit comprenant :
un port de signal d'entrée (350) pour la réception d'échantillons de signaux SPS d'un véhicule émetteur SPS particulier ;
un circuit corrélateur parallèle (380) connecté audit port de signal d'entrée, ledit circuit corrélateur parallèle comprenant un ou plusieurs circuits de corrélation (370), chaque circuit de corrélation dudit ou desdits un ou plusieurs circuits de corrélation étant configuré pour réaliser une première corrélation sur une séquence pseudo-aléatoire avec une première série desdits échantillons de signaux SPS au moyen d'un premier multiplicateur et additionneur (355, 357) afin de fournir un premier résultat corrélé, et pour réaliser une deuxième corrélation sur ladite séquence pseudo-aléatoire avec une deuxième série desdits échantillons de signaux SPS au moyen dudit premier multiplicateur et additionneur afin de fournir un deuxième résultat corrélé, **caractérisé en ce que** lesdits circuits de corrélation (370) comprennent en outre des lignes à retard (354, 358) placées avant et après ledit premier multiplicateur et additionneur (355, 357), dans lequel ladite deuxième corrélation est réalisée parallèlement à ladite première corrélation via un partage de temps dudit premier multiplicateur et additionneur (355, 357), lesdites lignes à retard (354, 358) étant configurées pour décaler de façon circulaire les échantillons et les échantillons corrélés des première et deuxième séries desdits échantillons de signaux SPS respectivement, dans lequel ladite deuxième série correspond à ladite première séquence de séries décalée dans le temps ;
un circuit intégrateur de post-détection (326, 328, 332) connecté audit circuit corrélateur parallèle afin de détecter des crêtes de signal contenues dans un signal de sortie dudit circuit corrélateur parallèle ;
un processeur (322) connecté à une sortie dudit circuit intégrateur de post-détection ; et une batterie de registres (324) connectée audit processeur.

10. Circuit selon la revendication 9, dans lequel chaque circuit de corrélation dudit ou desdits un ou plusieurs circuits de corrélation est en outre configuré pour réaliser des corrélations supplémentaires sur ladite séquence pseudo-aléatoire avec des séries supplémentaires desdits échantillons de signaux SPS au moyen dudit premier multiplicateur et additionneur afin de fournir des résultats corrélés supplémentaires, et dans lequel chaque série desdites séries supplémentaires correspond à ladite première série décalée dans le temps.

11. Circuit selon la revendication 10, dans lequel chacun dudit ou desdits un ou plusieurs circuits de corrélation comprend :
un générateur de code d'identification local (356) ;
une ligne à retard à plusieurs étages (358) connectée audit générateur de code d'identification local ; et un circuit additionneur (357) connecté à ladite ligne à retard à plusieurs étages via une boucle d'asservissement.

12. Support lisible par ordinateur comprenant au moins une instruction amenant un ordinateur à réaliser le procédé selon les revendications 1 à 8.
